# EUROPÄISCHE PATENTANMELDUNG

(11) **EP 2 590 278 A1**
(43) Veröffentlichungstag der Anmeldung: **08.05.2013**
(21) Anmeldenummer: 11008720.2
(22) Anmeldetag: 02.11.2011
(51) Int. Cl.: H02B 1/52

(54) **Hochleistungprüffeldmodul**

(71) Anmelder: ABB Technology AG, 8050 Zürich (CH)
(72) Erfinder: Werle, Peter, 29664 Walsrode (DE); Szczechowski, Janusz, 04229 Leipzig (DE); Steiger, Matthias, 06808 Bitterfeld-Wolfen OT Holzweißig (DE); Kouzmine, Oleg, 40217 Düsseldorf (DE)
(74) Vertreter: Partner, Lothar

(57) **Zusammenfassung**

Die Erfindung betrifft ein Prüffeldmodul (10, 30, 70, 100), umfassend einen quaderähnlichen Transportcontainer (12, 32, 72, 102) und darin beidseitig einer mittleren axialen Ebene (18, 74) fest angeordnete Komponentenmodule (14, 16, 36, 38, 86, 88, 90, 92) eines Hochspannungstransformatorprüfsystems. In wenigstens einer Seitenwand des Transportcontainers (12, 32, 72, 102) ist jeweils wenigstens eine mittels einer jeweiligen Abdeckung (20, 44, 78, 80, 82, 84) öffen- und verschließbare Aussparung (22, 48, 104, 106, 108, 110) vorgesehen, durch welche im geöffneten Zustand von außen ein direkter Wartungszugang (24) auf die dahinter fest angeordneten Komponentenmodule (14, 16, 36, 38, 86, 88, 90, 92) ermöglicht ist.

## Beschreibung

Die Erfindung betrifft ein Prüffeldmodul, umfassend einen quaderähnlichen Transportcontainer und darin beidseitig einer mittleren axialen Ebene fest angeordnete Komponentenmodule eines Hochspannungstransformatorprüfsystems.

Es ist allgemein bekannt, dass Hochspannungstransformatoren, beispielsweise in einem Spannungsbereich von 110kV oder 380kV und in einem Leistungsbereich von 100MVA und höher, sowohl zu Revisionszwecken als auch nach Abschluss von eventuellen Wartungs- oder Reparaturarbeiten aber auch direkt nach ihrer Fabrikation intensiv zu prüfen sind, um deren einwandfreie Funktion für den nächsten Betriebszeitraum sicher zu stellen, was oftmals eine Vielzahl an Jahren ist. Es sind sowohl stationäre als auch mobile Prüffelder im Einsatz. Letztere werden insbesondere für eine Vor- Ort- Prüfung von Transformatoren aufgebaut, danach abgebaut und zu einem nächsten Einsatzort transportiert. Auch wenn der Transport und Aufbau eines mobilen Prüffeldes zumeist mit einem sehr hohen Aufwand verbunden ist, so ist dieser dennoch zumeist geringer, als der Aufwand, einen Transformator mit einem Gewicht von beispielsweise 200t zu einem stationären Prüffeld zu transportieren. In vorteilhafter Weise ist zudem dann die Ausfallzeit eines in Prüfung befindlichen Transformators deutlich reduziert.

Hierbei kommen sowohl DC als auch AC Prüffelder zum Einsatz, mit welchen die entsprechenden Prüfbedingungen hergestellt werden können. Insbesondere AC Prüffelder müssen in der Lage sein, über einen längeren, oft mehrere Stunden andauernden, Zeitraum eine hohe elektrische Prüfleistung mit variabler Frequenz und variabler Spannung bereit zu stellen, beispielsweise für einen Dauerbelastungstest oder einen Kurzschlusstest. Hierbei haben sich aufgrund ihrer hohen Flexibilität rotierende Umformer bewährt, welche sich aufgrund des mechanischen Verschleißes aber als sehr wartungsintensiv erweisen. Zudem ist der Transport, Auf- und Abbau eines derartigen Umformers sehr arbeitsintensiv und es sind zusätzliche vibrationsdämpfende Maßnahmen für den Montageuntergrund vorzusehen.

Als nachteilig erweist sich bei den bestehenden AC Prüffeldsystemen also, dass diese einen hohen Aufwand für deren Transport, Auf- und Abbau erfordern und durch den typischerweise verwendeten rotierenden Umformer zudem sehr wartungsintensiv sind.

Ausgehend von diesem Stand der Technik ist es Aufgabe der Erfindung, ein Prüffeldsystem beziehungsweise Prüffeldsystemkomponenten für die Prüfung von Hochspannungstransformatoren zur Verfügung zu stellen, welche einen besonders einfachen Transport, Auf- und Abbau des Prüffeldsystems ermöglichen und einen rotierenden Umformer vermeiden.

Diese Aufgabe wird gelöst durch ein Prüffeldmodul der eingangs genannten Art. Dieses ist dadurch gekennzeichnet, dass in wenigstens einer Seitenwand des Transportcontainers jeweils wenigstens eine mittels einer jeweiligen Abdeckung öffen- und verschließbare Aussparung vorgesehen ist, durch welche im geöffneten Zustand von außen ein direkter Wartungszugang auf die dahinter fest angeordneten Komponentenmodule ermöglicht ist.

Die Grundidee der Erfindung beruht einerseits darin, ein Prüffeldsystem für Hochspannungstransformatoren aus möglichst wenigen und standardisierten Modulen aufzubauen, welche einfach zu transportieren sind und vor Ort beispielsweise durch entsprechende elektrische Steckverbindungen einfach zu einem kompletten Prüffeldsystem verschaltet werden können. Andererseits sind die jeweiligen Module möglichst elektrisch leistungsfähig auszugestalten, um so die Anzahl der Prüffeldmodule und damit auch den Transport- und Montageaufwand eines kompletten Prüffeldsystems in vorteilhafter Weise zu reduzieren. Um den Transport eines derartigen Prüffeldmoduls besonders zu vereinfachen, ist als Umhausung ein Container oder ein vergleichbarer transportgeeigneter quaderähnlicher Behälter vorgesehen, in welchem zumindest die Mehrzahl der Komponenten des Prüffeldsystems fest montiert ist und auch nach Aufstellung des Behälters vor Ort nicht neu angeordnet werden muss. Hierdurch ist auch der Aufbau vor Ort in vorteilhafter Weise vereinfacht.

Erfindungsgemäß sind anstelle eines rotierenden Umformers leistungselektronische Komponenten, insbesondere Wechsel- und Gleichrichter vorgesehen, mittels welcher eine Umformung der Versorgungsspannung, beispielsweise 6kV oder 10kV, in die gewünschte Frequenz oder Spannungshöhe erfolgt. Bedarfsweise ist für das erfindungsgemäße Prüffeldsystem auch ein Prüftransformator vorgesehen, um eine Spannungstransformation der Prüfspannung um einen höheren Faktor, beispielsweise in einem Bereich von 2 bis 20, zu ermöglichen.

Wechsel- beziehungsweise Gleichrichter werden in ähnlichen Anordnungen, beispielsweise in Elektrolokomotiven, in entsprechenden Umrichterschränken angeordnet, welche dann elektrisch miteinander verschaltet sind. Um einen jeweiligen Wartungszugang zu den Umrichterschränken zu ermöglichen ist im Inneren des typischerweise containerähnlich ausgeführten Lokomotivgehäuses ein begehbarer Wartungsgang vorgesehen, welcher sich in axialer Länge erstreckt. Ein derartiger Wartungsgang ermöglicht einerseits die zwangsläufig vorzusehende Zugänglichkeit zu den Wechsel- beziehungsweise Umrichterschränken, reduziert aber den zur Verfügung stehenden Platz innerhalb des Lokomotivgehäuses zur Anordnung von Wechselrichter- oder sonstigen elektrischen Komponenten. Dies ist im Falle einer Lokomotive jedoch unerheblich, weil für eine insgesamt benötigte installierte elektrische Leistung von beispielsweise 5MW genügend Raum zur Verfügung steht.

Im Falle eines Transformatorenprüffeldes ist eine elektrische Leistung von 5MW typischerweise nicht ausreichend, vielmehr können auch Leistungen von 10MW und darüber gefordert sein. Bei einer vergleichbaren Containeranordnung von Umrichtern wie in einer Lokomotive würden hierfür mehrere Transportcontainer benötigt, was den Transport- und Aufbauaufwand für ein modulares Transformatorprüffeld in nachteiliger Weise erhöht.

Die Erfindung sieht vor, den in dem Transportcontainer zur Verfügung stehenden Platz möglichst umfassend mit Prüfsystemkomponenten, beispielsweise Wechselrichterschränken, zu nutzen. Um dies zu ermöglichen ist erfindungsgemäß ein Wartungszugang von außen durch die eigentliche Containerbegrenzung vorgesehen, so dass insbesondere ein sonst üblicher innerer Wartungsgang entfallen kann. Hierzu sind Aussparungen in der jeweiligen Seitenwand des Containers vorgesehen, durch welche ein Wartungszugriff auf die unmittelbar dahinter an der Begrenzung des Containerinnenraumes angeordneten Komponentenmodule ermöglicht. Um dennoch einen sicheren Transport des Transportcontainers zu ermöglichen, sind Abdeckungen vorgesehen, beispielsweise aus Edelstahl, mittels welcher die Aussparungen von außen sicher verschließbar sind, beispielsweise entsprechende verschraub- oder verschließbare Deckel mit angepasster Form. Diese sind derart auszugestalten, dass in geschlossenem Transportzustand des Transportcontainers dessen Stabilität nicht beeinträchtigt ist, so dass beispielsweise ein gemeinsamer Seetransport zusammen mit beliebigen anderen Containern ermöglicht ist.

Wenn die Aussparung sehr großflächig ist und beispielsweise nahezu die gesamte Fläche einer Seitenwand des Transportcontainers umfasst, so sind erfindungsgemäß Struktur verstärkende Maßnahmen notwendig, beispielsweise eine Verstärkung der äußeren Rahmenstruktur oder das Einziehen von Stützstreben oder dergleichen. Auf diese Weise ist trotz Vorsehens der jeweiligen Aussparungen eine genügend hohe Stabilität des Transportcontainers gewährleistet. Der Eintritt eines Wartungsfalls, für welchen eine Zugänglichkeit der Komponentenmodule vorzusehen ist, ist jedoch ein Ausnahmefall, so dass im Regelfall das Prüffeldmodul auch während des Betriebes vor Ort verschlossen sein kann.

Komponentenmodule sind als Baugruppen eines Prüffeldsystems zu verstehen, welche dann in einem oder auch mehreren Prüffeldmodulen angeordnet sind, welche dann zu einem Prüffeldsystem für Hochspannungstransformatoren verschaltbar sind. Dies können beispielsweise Umrichtermodule oder Umrichterschränke sein, Kondensatorbänke für die Filterung einer erzeugten Wechselspannung, Steuerschränke aber auch Strombegrenzerspulen oder Teile eines Kühlsystems oder dergleichen.

Durch die Schaffung eines Wartungszugangs von außen zu den Komponentenmodulen ist keine Zugänglichkeit des Transportcontainers von innen mehr erforderlich, so dass der Innenraum nunmehr in besserem Maße für die Anordnung von Komponentenmodulen oder anderen Teilen des Prüfsystems für Hochspannungstransformatoren genutzt werden kann, so dass letztendlich leistungsfähigere Prüffeldmodule ermöglicht sind. Als Folge dessen sind zur Bildung eines modularen Prüffeldsystems in vorteilhafter Weise weniger Prüffeldmodule erforderlich, was letztendlich den Aufbau und Transport eines derartigen Systems vereinfacht.

Gemäß einer weiteren Ausgestaltung des erfindungsgemäßen Prüffeldmoduls weist der Transportcontainer die Abmessungen eines Standard- Transportcontainers nach ISO 668 auf und/oder ist nach CSC (International Convention for Save Containers) zugelassen. Dies ermöglicht den uneingeschränkten Transport zusammen mit beliebigen weiteren Transportcontainern, beispielsweise in jeder beliebigen Position eines Containerstapels bei einem Seetransport.

Einer weiteren Variante folgend ist die Anordnung der Aussparungen auf die Positionierung und Form der innerhalb des Transportcontainers dahinter fest angeordneten Komponentenmodule angepasst. Hierdurch ist ein Wartungszugriff auf den gesamten Querschnitt der Komponentenmodule ermöglicht, so dass bedarfsweise auch beispielsweise Türen von Umrichterschränken oder dergleichen nach außen durch die geöffnete Aussparung geöffnet werden können. Es ist durchaus möglich, dass eine Aussparung größer ist als der entsprechende Querschnitt eines dahinter angeordneten Komponentenmoduls. Es sind können auch mehrere Komponentenmodule durch eine entsprechend große gemeinsame Aussparung zugänglich sein.

Entsprechend einer weiteren Ausführungsform ist die wenigstens eine Abdeckung klappbar, vergleichbar beispielsweise mit einer Tür oder einem Fenster. Dies ermöglicht ein besonders einfaches Öffnen und Schließen der jeweiligen Aussparung. Bedarfsweise ist ein Schließmechanismus vorzusehen, der ein ungewolltes Öffnen der Abdeckung verhindert.

Gemäß einer weiteren Ausführungsvariante weist wenigstens eine Abdeckung mehrere gelenkig verbundene Segmente auf und ist aufrollbar, ähnlich wie beispielsweise eine Jalousie. Die gelenkig verbundenen Segmente sind hierbei vorzugsweise lattenähnlich auszuführen und an den jeweiligen lateralen Enden in einer jeweiligen Führungsschiene angeordnet. Hierdurch ist ein Öffnen der Aussparung ermöglicht, ohne um das Prüffeldmodul herum durch die geöffnete Abdeckung eine Störkontur zu erzeugen.

Gemäß einer weiteren Ausgestaltungsform des erfindungsgemäßen Prüffeldmoduls umfasst dieses wenigstens eine Bewegungsvorrichtung, mittels welcher wenigstens ein Komponentenmodul durch die wenigstens eine Aussparung von einer ersten Position innerhalb des Transportcontainers in eine zweite zumindest teilweise außerhalb des Transportcontainers befindliche Position bewegbar ist. Durch das Herausfahren mittels einer entsprechenden Bewegungsvorrichtung, beispielsweise einer angetriebenen Teleskopschiene, ist in vorteilhafter Weise die Zugänglichkeit des jeweiligen Komponentenmoduls für Wartungszwecke erhöht, ohne dabei die Außenkonturen des Prüffeldmoduls im eingefahrenen Transportzustand zu beeinträchtigen.

Es ist auch möglich, das jeweilige Komponentenmodul im aktiven Prüfbetrieb im herausgefahrenen Zustand zu betreiben, insbesondere, wenn das Prüffeldsystem in einem geschlossenen Raum oder einer geschlossenen Halle aufgebaut ist. Hier ist einerseits keine Schutzfunktion des Transportcontainers zum Schutz der Komponentenmodule beispielsweise vor Witterungseinflüssen erforderlich, auf der anderen Seite ist eine verbesserte Kühlung des ausgefahrenen Komponentenmoduls ermöglicht, weil dann eine erhöhte Kontaktfläche mit der Umgebungsluft gegeben ist.

Eine weitere Erfindungsvariante ist dadurch gekennzeichnet, dass durch Herausbewegen von jeweiligen Komponentenmodulen im Inneren des Transportcontainers längs seiner mittleren axialen Ebene ein begehbarer Wartungsgang gebildet ist. In diesem Fall werden alle an einer Seite des Transportcontainers angeordneten Komponentenmodule durch eine oder auch mehrere Aussparungen vor Ort seitlich um beispielsweise 90cm herausbewegt. Der dadurch entsprechend im Innenraum des Prüfcontainers freiwerdende Raum kann dann als Wartungsgang genutzt werden, insofern durch beispielsweise eine entsprechende Zugangstür an einer der Stirnseiten des Prüfmoduls ein Betreten desselben ermöglicht ist. Durch den so gebildeten Wartungsgang ist eine Zugänglichkeit aller beidseitig des Wartungsganges angeordneten Komponentenmodule gewährleistet.

Gemäß einer weiteren Ausführungsvariante ist wenigstens ein Komponentenmodul lösbar mit dem Prüffeldmodul beziehungsweise einer jeweils zugeordneten Bewegungsvorrichtung verbunden und im gelösten Zustand durch die jeweilige Aussparung entnehmbar. Auf diese Weise lässt sich im Wartungsfall einfach ein gegebenenfalls defektes Komponentenmodul durch ein neues austauschen. Vorteilhafterweise sind Komponentenmodule daher entsprechend ihrer Funktionalität ebenfalls möglichst standardisiert auszuführen, beispielsweise durch Baugleichheit von mehreren elektrisch parallel geschalteten Umrichterschränken. Diese sind aufgrund ihrer hohen Standardisierbarkeit ein Beispiel für Komponentenmodule, welche sich besonders für einen Einsatz in einem erfindungsgemäßen Prüffeldmodul eignen.

Entsprechend einer weiteren Ausführungsform eines erfindungsgemäßen Prüffeldmoduls ist ein Kühlsystem zur Kühlung der Komponentenmodule vorgesehen, welches vorzugsweise in das Prüffeldmodul integriert ist. Dies ist insbesondere bei Komponentenmodulen mit hoher elektrischer Verlustleistung sinnvoll, wie beispielsweise Umrichterschränken, welche im Betrieb eine elektrische Verlustleistung von beispielsweise 1 % bis 5% ihrer Nennleistung aufweisen können. Aufgrund der erfindungsgemäßen hohen Anordnungsdichte der Komponentenmodule im erfindungsgemäßen Prüffeldmodul ist hier die Problematik der Abfuhr von im Betrieb entstehender Verlustwärme von besonderer Bedeutung. Das Kühlsystem kann entweder klassisch auf einem Wärmetausch mit der Umgebungsluft, beispielsweise über Wärmetauscher, beruhen, oder aber auch an einen externen Kühlmittelkreislauf angeschlossen sein.

Einer weiteren Erfindungsvariante folgend umfasst das Kühlsystem wenigstens einen Wärmetauscher und es ist eine Bewegungsvorrichtung vorgesehen, mittels welcher der wenigstens eine Wärmetauscher von einer Transportposition innerhalb des Transportcontainers in eine Arbeitsposition zumindest teilweise außerhalb des Transportcontainers bewegbar ist. Der erfindungsgemäße Vorteil liegt hierbei in einer besonders platzsparenden und kompakten Anordnung des Wärmetauschers zu Transportzwecken innerhalb des Prüffeldmoduls, wobei bei Betrieb des Prüffeldmoduls der Wärmetauscher zumindest teilweise aus diesem herausbewegt ist. Aufgrund der dann erhöhten Kontaktfläche mit der Umgebungsluft ist eine deutlich erhöhte Effizienz des Kühlsystems erreicht. Vorzugsweise ist ein derartiges Kühlsystem als geschlossener Kühlkreislauf mit Kondensator und Verdampfer ausgeführt, wobei der oder auch mehrere Verdampfer durch Verdampfen der Kühlflüssigkeit Wärmeenergie im Inneren des Prüffeldmoduls aufnehmen und an den heraus bewegbaren Kondensator abgeben. Ein derartiger Kondensator ist beispielsweise im oberen Bereich des Prüffeldmoduls angeordnet und schubladenähnlich aus diesem durch eine jeweilige Öffnung heraus fahrbar. Durch ein auf die Oberfläche des Kondensators gerichtetes Gebläse ist die Effizienz eines derartigen Kühlsystems bedarfsweise noch zu steigern.

Die erfindungsgemäße Aufgabe ist auch gelöst durch ein Prüffeldsystemen für Leistungstransformatoren, wobei dieses modular aufgebaut ist und wenigstens ein erfindungsgemäßes Prüffeldmodul mit entsprechenden Leistungstransformatorprüfvorrichtungen umfasst. Wie eingangs erwähnt ermöglicht der modulare Aufbau, vorzugsweise unter Verwendung von Containern oder quaderähnlichen Behältern als Gehäuse, einen einfachen Transport und problemlosen Aufbau vor Ort, insbesondere weil die Prüfkomponenten zumindest überwiegend bereits in einer festen Position innerhalb des Containers angeordnet sind. Die Modularität ermöglicht zudem ein bedarfsweises elektrisches Zusammenschalten von mehreren standardisierten Komponenten, wie beispielsweise Prüffeldmodulen, zu einem Prüffeldsystem. So ist beispielsweise die Leistung eines Prüffeldes durch Implementierung eines weiteren Prüffeldmoduls mit Umrichtern entsprechend einfach steigerbar.

Erfindungsgemäß sind jedoch auch die Komponentenmodule innerhalb der jeweiligen Prüffeldmodule vorzugsweise entsprechend ihrer jeweiligen Funktionalität zu standardisieren, so dass sich letztendlich ein doppelt modulares Prüffeldsystem ergibt.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen Schnitt durch ein erstes exemplarisches Prüffeldmodul,
- Fig. 2: einen Schnitt durch ein zweites exemplarisches Prüffeldmodul,
- Fig. 3: einen Schnitt durch einen Prüffeldbehälter nach dem Stand der Technik,
- Fig. 4: einen Schnitt durch ein drittes exemplarisches Prüffeldmodul und
- Fig. 5: ein viertes exemplarisches Prüffeldmodul.

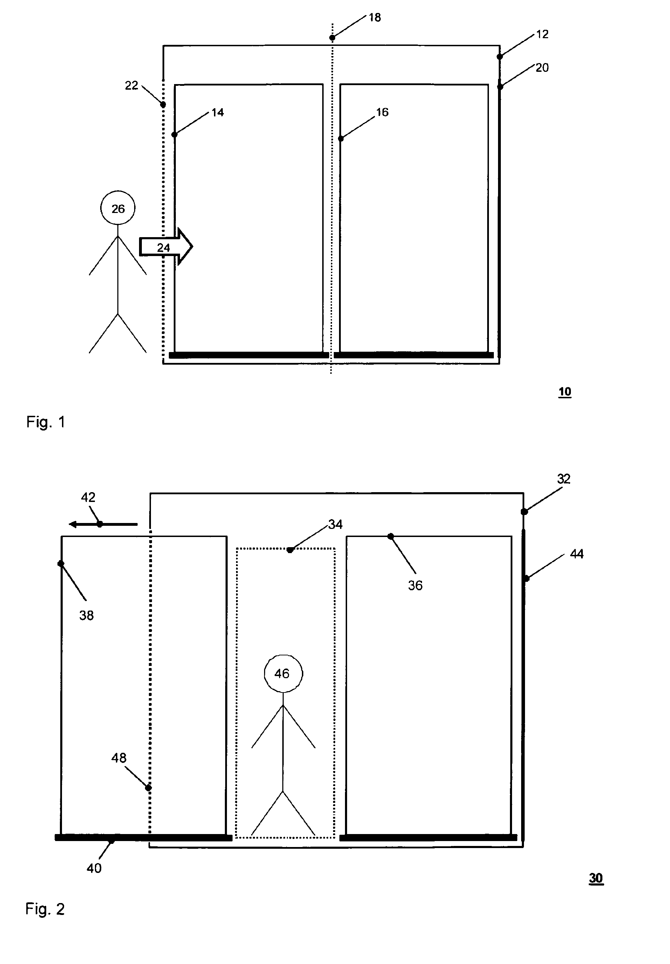

Fig. 1 zeigt einen Schnitt durch ein erstes exemplarisches Prüffeldmodul 10, welches die Abmessungen eines standardisierten Transportcontainers aufweist und damit problemlos auf einem LKW oder auch Containerschiff transportierbar ist. Standardisierte Abmessungen betragen beispielsweise in der Breite 2,438m, in der Höhe 2,591m und in der Länge 6,058m beziehungsweise 12,192m. In einem quaderähnlichen Transportcontainer 12 angeordnet sind längs und beidseitig einer mittleren axialen Ebene 18 mehrere Komponentenmodule 14, 16, welche in Schrankbauweise ausgeführt sind und beispielsweise jeweils mehrere Wechselrichtermodule enthalten. Es können aber auch beliebige andere Komponenten enthalten sein, welche für ein Hochspannungstransformatorprüfsystem erforderlich sind, beispielsweise Kondensatorbänke, Hilfstransformatoren oder Teile eines Kühlsystems.

Durch die schrankähnliche Ausführung der Komponentenmodule 14, 16, welche vorzugsweise in einem festen Raster im Transportcontainer 12 angeordnet sind, lässt sich der im Innenraum zur Verfügung stehende Platz bedarfsgerecht nutzen. Es ist sowohl erfindungsgemäß vorgesehen, die jeweiligen Komponentenmodule entsprechend ihrer jeweiligen Funktionalität möglichst baugleich auszuführen als auch die daraus gebildeten Prüffeldmodule entsprechend ihrer Funktionalität baugleich zu halten. Eine entsprechend höhere elektrische installierte Leistung eines modularen Hochspannungstransformatorprüfsystems wird zunächst durch das Verschalten mehrerer baugleicher Komponentenmodule innerhalb desselben Transportcontainers 12 erreicht und wenn dessen Platzangebot im Innenraum nicht ausreichend ist durch Verschaltung mehrerer baugleicher Prüffeldmodule 14, 16 der jeweiligen Funktionalität.

Durch diese doppelte Modularität ist es sowohl möglich, Prüffeldsysteme mit geringer elektrischer Leistung durch Anordnung der jeweils benötigten Komponentenmodule unterschiedlicher Funktionalität 14, 16 innerhalb desselben Transportcontainers 12 beziehungsweise eines einzigen Prüffeldmoduls 10 zu realisieren. Es ist gerade bei größeren geforderten elektrischen Leistungen aber vorgesehen, ein Hochspannungstransformatorprüfsystem aus mehreren Prüffeldmodulen zusammenzuschalten, welche dann eine gegebenenfalls unterschiedliche Funktionalität aufweisen.

Das in der Fig. gezeigte Prüffeldmodul 10 weist eine hohe Anordnungsdichte an Komponentenmodulen 14, 16 auf, was insbesondere durch den Wegfall eines sonst obligatorischen Wartungsganges ermöglicht ist. So sind an beiden Seitenflächen des Transportcontainers Aussparungen 22 vorgesehen, welche dann mit Abdeckungen 20 verschließbar sind. Die Komponentenmodule 14, 16 sind derart ausgestaltet, dass sie von der der jeweiligen Aussparung 22 zugewandten Seite her gewartet werden können. So ist beispielsweise im Falle eines Wechselrichterschrankes dieser in Richtung der zugehörigen Aussparung 22 öffenbar. Somit ist für das Wartungspersonal 26 ein Wartungszugang 24 von außen gewährleistet, wodurch wiederum eine verbesserte Ausnutzung des im Transportcontainer 12 zur Verfügung stehenden Platzes ermöglicht ist, was wiederum letztendlich zu einer reduzierten Anzahl an für ein Hochspannungstransformatorprüfsystem benötigten Prüffeldmodulen 10 beziehungsweise einer erhöhten Leistungsfähigkeit derselben führt.

Fig. 2 zeigt einen Schnitt durch ein zweites exemplarisches Prüffeldmodul 30, welches in etwa dem in der Fig. 1 gezeigten Prüffeldmodul 10 entspricht. In einem Transportcontainer 32 angeordnet sind zwei Komponentenmodule 36, 38. Der Transportcontainer 32 weist beidseitig Aussparungen 48 auf, welche in ihrem Querschnitt auf den Querschnitt der direkt dahinter angeordneten Komponentenmodule 36, 38 angepasst sind und welche mittels jeweiliger Abdeckungen 44 transportsicher verschließbar sind. Diese sind ihrerseits auf Bewegungsvorrichtungen 40 montiert, beispielsweise Teleskopschienen, mittels derer sie durch die Öffnungen 48 wie mit einem Pfeil 42 angedeutet herausbewegt werden können. In herausbewegtem Zustand des gezeigten Komponentenmoduls 38 ist im Inneren des Transportcontainers 32 ein als Wartungsgang 34 nutzbarer Platz freigeworden. Dieser kann von Wartungspersonal 46 durch eine nicht gezeigte stirnseitige Tür betreten werden wodurch ein auch Wartungszugang der Komponentenmodule von deren der jeweiligen Aussparung abgewandten Seite ermöglicht ist.

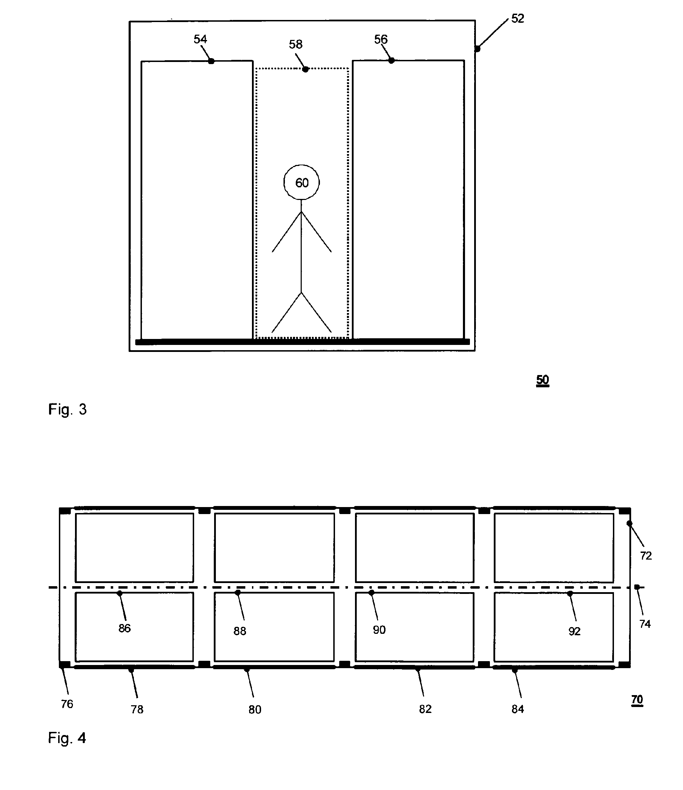

Fig. 3 zeigt einen Schnitt 50 durch einen Prüffeldbehälter nach dem Stand der Technik. Innerhalb eines quaderähnlichen Behälters 52 sind beidseitig eines durch Wartungspersonal 60 begehbaren Wartungsgangs 58 Wechselrichterschränke 54, 56 angeordnet. Aufgrund des Raumbedarfes für den Wartungsgang, beispielsweise mit einer Breite von 80cm, ist der für die Anordnung von Wechselrichterschränken oder dergleichen verfügbare Platz entsprechend geringer. Bei einer zur Verfügung stehenden inneren Breite des quaderähnlichen Behälters 52 von 2,4m beispielsweise ist aufgrund des Wartungsgangs, welcher beispielsweise eine Breite von 0,8m aufweist, die mögliche Breite von beidseitig des Wartungsganges installierten Wechselrichterschränken auf jeweils 0,8m beschränkt. Der erfindungsgemäße Wegfall des Wartungsgangs durch einen Wartungszugriff von außen ermöglicht dann eine jeweilige Breite eines Wechselrichterschrankes beziehungsweise sonstigen Komponentenmoduls von jeweils 1,2m, was einer Steigerung des Volumens und damit der installierbaren Leistung von 50% entspricht.

Fig. 4 zeigt einen Schnitt durch ein drittes exemplarisches Prüffeldmodul 70 in einer Draufsichtperspektive. In einem CSC zugelassenem 40 Fuß langen quaderähnlichen Transportcontainer 72 angeordnet sind beiderseits einer gedachten mittleren axialen Ebene 74 mehrere Komponentenmodule 86, 88, 90, 92, deren Funktionalitäten denen der zuvor genannten Komponentenmodulen entsprechen können und welche vorzugsweise gleiche Außenabmessungen aufweisen. Für jedes Komponentenmodul 86, 88, 90, 92 ist eine jeweilige Aussparung in den Seitenwänden des Transportcontainers 72 vorgesehen, welche dann mit jeweiligen Abdeckungen 78, 80, 82, 84 transportsicher verschließbar sind. Bei geöffneten Abdeckungen 78, 80, 82, 84 ist ein jeweiliger Wartungszugriff auf die unmittelbar dahinter angeordneten Komponentenmodule 86, 88, 90, 92 gegeben. Bedarfsweise sind diese auch durch die jeweiligen Aussparungen aus dem Transportcontainer 72 mittels einer nicht gezeigten Transportvorrichtung herausfahrbar beziehungsweise entnehm- und austauschbar. Die Aussparungen einer Seite entsprechen in ihrer Gesamtfläche nahezu der Fläche der jeweiligen Seitenwand, so dass Struktur verstärkende Maßnahmen getroffen wurden, die Stabilität des Transportcontainers 72 zu gewährleisten, in diesem Falle eine säulenähnliche Stützstruktur 76.

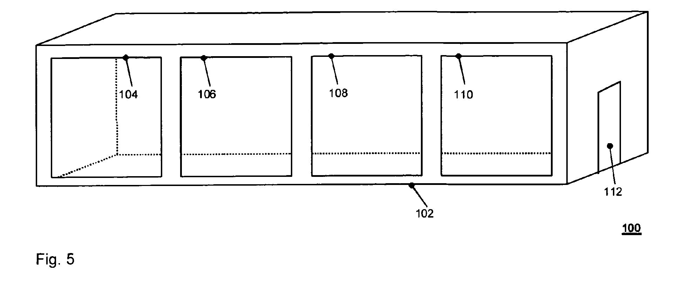

Fig. 5 zeigt ein viertes exemplarisches Prüffeldmodul 100 in einer dreidimensionalen Ansicht, jedoch ohne darin angeordnete Komponentenmodule. Die äußere Form des Prüffeldmoduls 100 ist durch einen quaderähnlichen Transportcontainer 102 gegeben, welcher an seiner einen Seitenfläche vier Aussparungen 104, 106, 108, 110 aufweist, hinter welchen eine Anordnung von Komponentenmodulen vorgesehen ist. An einer Stirnseite des Transportcontainers 102 ist eine Eingangstür 112 vorgesehen. Durch diese ist ein im Containerinneren gebildeter und nicht gezeigter Wartungsgang betretbar, der temporär durch seitliches Herausbewegen der nicht gezeigten Komponentenmodule durch die seitlichen Aussparungen 104, 106, 108, 110 entsteht.

### Bezugszeichenliste

- 10: Schnitt durch erstes exemplarisches Prüffeldmodul
- 12: erster quaderähnlicher Transportcontainer
- 14: erstes Komponentenmodul
- 16: zweites Komponentenmodul
- 18: mittlere axiale Ebene
- 20: erste Abdeckung
- 22: erste Aussparung
- 24: Wartungszugang
- 26: Wartungspersonal
- 30: Schnitt durch zweites exemplarisches Prüffeldmodul
- 32: zweiter quaderähnlicher Transportcontainer
- 34: begehbarer Wartungsgang
- 36: drittes Komponentenmodul
- 38: viertes Komponentenmodul
- 40: Bewegungsvorrichtung
- 42: Bewegungsrichtung viertes Komponentenmodul
- 44: zweite Abdeckung
- 46: Wartungspersonal
- 48: zweite Aussparung
- 50: Schnitt durch Prüffeldbehälter nach Stand der Technik
- 52: dritter quaderähnlicher Behälter
- 54: erster Wechselrichterschrank
- 56: zweiter Wechselrichterschrank
- 58: begehbarer Wartungsgang
- 60: Wartungspersonal
- 70: Schnitt durch drittes exemplarisches Prüffeldmodul
- 72: vierter quaderähnlicher Transportcontainer
- 74: mittlere axiale Ebene
- 76: Stützstruktur
- 78: dritte Abdeckung
- 80: vierte Abdeckung
- 82: fünfte Abdeckung
- 84: sechste Abdeckung
- 86: fünftes Komponentenmodul
- 88: sechstes Komponentenmodul
- 90: siebtes Komponentenmodul
- 92: achtes Komponentenmodul
- 100: viertes exemplarisches Prüffeldmodul
- 102: fünfter quaderähnlicher Transportcontainer
- 104: dritte Aussparung
- 106: vierte Aussparung
- 108: fünfte Aussparung
- 110: sechste Aussparung
- 112: Tür

## Patentansprüche

1. Prüffeldmodul (10, 30, 70, 100), umfassend einen quaderähnlichen Transportcontainer (12, 32, 72, 102) und darin beidseitig einer mittleren axialen Ebene (18, 74) fest angeordnete Komponentenmodule (14, 16, 36, 38, 86, 88, 90, 92) eines Hochspannungstransformatorprüfsystems,
**dadurch gekennzeichnet,**
**dass** in wenigstens einer Seitenwand des Transportcontainers (12, 32, 72, 102) jeweils wenigstens eine mittels einer jeweiligen Abdeckung (20, 44, 78, 80, 82, 84) öffen- und verschließbare Aussparung (22, 48, 104, 106, 108, 110) vorgesehen ist, durch welche im geöffneten Zustand von außen ein direkter Wartungszugang (24) auf die dahinter fest angeordneten Komponentenmodule (14, 16, 36, 38, 86, 88, 90, 92) ermöglicht ist.

2. Prüffeldmodul nach einem der vorherigen Ansprüche, **dadurch gekennzeichnet, dass** der Transportcontainer (12, 32, 72, 102) die Abmessungen eines Standard-Transportcontainers nach ISO 668 aufweist und/oder nach CSC zugelassen ist.

3. Prüffeldmodul nach einem der Ansprüche 1 oder 2, **dadurch gekennzeichnet, dass** die Anordnung der Aussparungen (22, 48, 104, 106, 108, 110) auf die Positionierung und Form der innerhalb des Transportcontainers (12, 32, 72, 102) dahinter fest angeordneten Komponentenmodule (14, 16, 36, 38, 86, 88, 90, 92) angepasst ist.

4. Prüffeldmodul nach einem der vorangegangenen Ansprüche, **dadurch gekennzeichnet, dass** wenigstens eine Abdeckung (20, 44, 78, 80, 82, 84) klappbar ist.

5. Prüffeldmodul nach einem der vorangegangenen Ansprüche, **dadurch gekennzeichnet, dass** wenigstens eine Abdeckung (20, 44, 78, 80, 82, 84) mehrere gelenkig verbundene Segmente aufweist und aufrollbar ist.

6. Prüffeldmodul nach einem der vorangegangenen Ansprüche, **dadurch gekennzeichnet, dass** dieses wenigstens eine Bewegungsvorrichtung (40) umfasst, mittels welcher wenigstens ein Komponentenmodul (14, 16, 36, 38, 86, 88, 90, 92) durch die wenigstens eine Aussparung (22, 48, 104, 106, 108, 110) von einer ersten Position innerhalb des Transportcontainers (12, 32, 72, 102) in eine zweite zumindest teilweise außerhalb des Transportcontainers (12, 32, 72, 102) befindliche Position bewegbar ist.

7. Prüffeldmodul nach Anspruch 6, **dadurch gekennzeichnet, dass** durch Herausbewegen (42) von jeweiligen Komponentenmodulen (14, 16, 36, 38, 86, 88, 90, 92) im Inneren des Transportcontainers (12, 32, 72, 102) längs seiner mittleren axialen Ebene (18, 74) ein begehbarer Wartungsgang (34) gebildet ist.

8. Prüffeldmodul nach einem der vorherigen Ansprüche, **dadurch gekennzeichnet, dass** wenigstens ein Komponentenmodul (14, 16, 36, 38, 86, 88, 90, 92) lösbar mit diesem beziehungsweise der jeweiligen Bewegungsvorrichtung (40) verbunden ist und im gelösten Zustand durch die jeweilige Aussparung (22, 48, 104, 106, 108, 110) entnehmbar ist.

9. Prüffeldmodul nach einem der vorherigen Ansprüche, **dadurch gekennzeichnet, dass** zumindest einige der Komponentenmodule (14, 16, 36, 38, 86, 88, 90, 92) als Umrichtermodule ausgeführt sind.

10. Prüffeldmodul nach einem der vorherigen Ansprüche, **dadurch gekennzeichnet, dass** ein Kühlsystem zur Kühlung der Komponentenmodule (14, 16, 36, 38, 86, 88, 90, 92) vorgesehen ist.

11. Prüffeldmodul nach Anspruch 10, **dadurch gekennzeichnet, dass** das Kühlsystem wenigstens einen Wärmetauscher umfasst und dass eine Bewegungsvorrichtung vorgesehen ist, mittels welcher der wenigstens eine Wärmetauscher von einer Transportposition innerhalb des Transportcontainers (12, 32, 72, 102) in eine Arbeitsposition zumindest teilweise außerhalb des Transportcontainers (12, 32, 72, 102) bewegbar ist.

12. Prüffeldsystemen für Leistungstransformatoren, **dadurch gekennzeichnet, dass** dieses modular aufgebaut ist und wenigstens ein Prüffeldmodul nach einem der Ansprüche 1 bis 11 umfasst.

13. Prüffeldsystemen für Leistungstransformatoren nach Anspruch 12, **dadurch gekennzeichnet, dass** wenigstens ein Prüffeldmodul ein Umrichtermodul ist.
